# EUROPÄISCHE PATENTSCHRIFT

(11) **EP 1 227 353 B1**
(45) Veröffentlichungstag und Bekanntmachung des Hinweises auf die Patenterteilung: **04.05.2005**
(21) Anmeldenummer: 01129899.9
(22) Anmeldetag: 15.12.2001
(51) Int. Cl.: G02B 7/195, G02B 5/08, H01S 3/04, G02B 7/18

(54) **Spiegel für Laseranwendungen sowie Verfahren zu seiner Herstellung**
Laser mirror and method for manufacturing the same
Miroir à laser et procédé pour sa fabrication

(30) Priorität: 16.01.2001 DE 10101887; 23.01.2001 DE 10102935
(43) Veröffentlichungstag der Anmeldung: 31.07.2002
(73) Patentinhaber: Curamik Electronics GmbH, 92676 Eschenbach (DE)
(72) Erfinder: Exel, Karl, Dr. Dipl.-Phys., 64668 Rimbach (DE); Kugler, Lothar, 88682 Salem (DE); Meyer, Andreas, Dipl.-Ing., 92676 Eschenbach (DE); Schulz-Harder, Jürgen, Dr.-Ing., 91207 Lauf (DE); Schmidt, Karsten, Dipl.-Ing., 92676 Eschenbach (DE)
(74) Vertreter: Graf, Helmut, Dipl.-Ing.

(56) Entgegenhaltungen:
- EP-A- 0 520 670
- DE-A- 3 339 076
- US-A- 4 443 059
- US-A- 4 770 521
- US-A- 5 002 378
- US-A- 5 293 070

## Beschreibung

Die Erfindung bezieht sich auf einen Spiegel gemäß Oberbegriff Patentanspruch 1 sowie auf ein Verfahren zu seiner Herstellung gemäß Oberbegriff Patentanspruch 14.

In Lasereinrichtungen, beispielsweise auch in solchen zum Bearbeiten von Werkstücken sind in der Regel auch Spiegel zum Umlenken des Laserstrahls erforderlich, insbesondere auch Spiegel, die zum Bearbeiten eines Werkstücks durch einen Antrieb bewegt werden. Obwohl der Laserstrahl zur Reduzierung der Leistungsdichte in der Regel als aufgeweiteter Strahl über die verwendeten Spiegel geführt ist, ist es üblich und auch bekannt, derartige Spiegel aktiv zu kühlen, und zwar mit einem eine Kühlerstruktur des Spiegelkörpers durchströmenden Kühlmedium, vorzugsweise mit einem flüssigen Kühlmedium, beispielsweise mit Wasser.

Der aufgeweitete Laserstrahl wird dann für die Bearbeitung des betreffenden Werkstückes durch eine Optik in einem Fokus fokussiert. Für den Fokus wird eine hohe Qualität gefordert, d. h. insbesondere ein vorgegebener Querschnitt, beispielsweise ein kreisrunder Querschnitt, und eine möglichst homogene Verteilung der Laser-Leistung innerhalb des Fokus. Nur wenn durch eine entsprechend hohe Strahlqualität diese Bedingungen erfüllt sind, ist ein Bearbeiten eines Werkstückes mit der erforderlichen Qualität möglich.

Zu fordern ist bei Spiegeln für Laseranwendungen also u. a., daß sie bzw. deren Spiegelflächen eine hohe mechanische und thermische Stabilität aufweisen, d. h. eine hohe Stabilität gegenüber äußere Kraft- und/oder Druckeinwirkung, gegenüber Temperaturschwankungen usw. und hierdurch bedingte Veränderungen und/oder Verformungen der Spiegelfäche absolut vermieden sind. Bereits kleinste Veränderungen und/oder Verformungen, beispielsweise Verwölbungen der Spiegelfläche im Sub-Mikrometer-Bereich führen nämlich zu einer schwerwiegenden Verschlechterung der Strahlqualität des am Spiegel reflektierten Laserstrahls, insbesondere zu einer Verschlechterung der Strahlform bzw. des Strahlquerschnitts und der Qualität des Laserstrahlfokus auf einer zu bearbeitenden Fläche eines Werkstückes usw. Weiterhin führen geringste Verformungen an der Spiegelfläche zu erheblichen Laufzeitunterschieden im Laserstrahl, die (Laufzeitunterschiede) die Qualität des Laserstrahlfokus ebenfalls beeinträchtigen und damit auch die Qualität der Bearbeitung eines Werkstückes mit dem Laser.

Aus dem Stand der Technik sind zahlreiche Vorschläge für gekühlte Spiegel für Laseranwendungen bekannt. Alle diese Vorschläge sind nicht zufriedenstellend.

Bekannt ist ein gekühlter Spiegel für einen Laser mit hoher Leistung (US 4,443,059). Bei diesem bekannten Spiegel ist die Spiegelfläche von der Oberfläche einer Schicht gebildet, die aus einem Material besteht, welches eine hohe thermische Leitfähigkeit aufweist, dessen thermischer Ausdehnungskoeffizient aber möglichst exakt an das Material der anschließenden Komponenten des gekühlten Spiegels angepaßt ist und dabei insbesondere an den thermischen Ausdehnungskoeffizienten der anschließenden Kühlerstruktur. Als Material für die die Spiegelfläche aufweisende Schicht werden daher Molybdän, Wolfram, Silizium-Karbid oder Silizium-Nitrid vorgeschlagen. Die Kühlerstruktur ist von einer weiteren Platte gebildet, die an einer Seite einer Vielzahl von Nuten versehen ist, die durch Stege getrennt sind und Kühlkanäle für das Kühlmedium bilden. Mit den Stegen ist diese Kühlerstruktur direkt mit der die Spiegelfläche aufweisenden Platte verbunden. Mit ihrer der Spiegelfläche abgewandten Seite ist die die Kühlerstruktur bildende Platte mit einem Tragkörper aus einem wabenförmigen Profil verbunden, in welchem auch Kanäle zum Zuführen und Abführen des Kühlmediums ausgebildet sind.

Nachteilig ist u. a. der komplizierte und auch noch unsymmetrische Aufbau, den der bekannte Spiegel in der Achsrichtung senkrecht zur Spiegelfläche aufweist und der zu thermischen Verformungen (Bimetalleffekt) führt. Nachteilig ist aber auch, daß die die einzelnen Stege der die Kühlstruktur bildenden Platte unmittelbar und ohne weitere Zwischenschicht an die die Spiegelfläche aufweisende Schicht anschließen, es hierdurch zu einer ungleichmäßigen Kühlung und damit zu Verformungen an der Spiegelfläche kommt. Nachteilig ist bei dem bekannten Spiegel schließlich auch, daß dieser eine hohe Masse aufweist, was insbesondere bei Laserspiegeln, die für die Bearbeitung eines Werkstückes bewegt werden, nicht erwünscht ist.

Die verwendeten nutenartigen Kühlkanäle haben weiterhin auch den Nachteil, daß die Steifigkeit des Spiegels an der Spiegelfläche in Längsrichtung der Nuten größer ist als in Querrichtung. Dies führt bei der notwendigen Bearbeitung der Spiegelfläche beispielsweise durch Fräsen mit einem Diamant-Werkzeug dazu, daß sich in der Spiegelfläche bedingt durch diese unterschiedliche Steifigkeit Strukturen bilden, die ebenfalls die Strahlenqualität verschlechtern. Dieser Nachteil haftet allen bekannten Spiegeln an, die parallel zur Spiegelfläche verlaufende Kühlkanäle verwenden.

Bekannt ist auch ein gekühlter Spiegel für Laseranwendungen (US 5,002,378), der ein geringes Gewicht aufweist. Zur Kühlung dieses bekannten Spiegels ist aber nicht eine Kühlerstruktur vorgesehen, die Anschlüsse zum Zu- und Abführen eines Kühlmediums aufweist und daher an einen äußeren Kühlmediumkreislauf anschließbar ist. Im bekannten Fall ist vielmehr die Kühleinrichtung nach dem Heat-Pipe-Kühlprinzip ausgeführt.

Bekannt ist weiterhin eine mit Flüssigkeit gekühlte Spiegelstruktur (US 3,781,094), bei der die Kühlerstruktur von einer Vielzahl von sich senkrecht kreuzenden Kühlkanälen gebildet ist, die jeweils von Stegen begrenzt sind. Nachteil dieser bekannten Konstruktion ist wiederum die fehlende Symmetrie in Richtung senkrecht zur Spiegelachse, insbesondere auch der Kühlerstruktur sowie die aufwendige Herstellung. Weiterhin reichen bei diesem bekannten Spiegel wiederum die die Kühlkanäle trennenden Stege bis unmittelbar an die die Spiegelfläche aufweisende Schicht, so daß keine homogene Kühlung der Spiegelfläche erreicht ist und somit thermische Verformungen und Verwerfungen der Spiegelfläche unvermeidbar sind.

Bekannt ist bei einem bekannten Spiegel für Laseranwendungen auch eine Vielzahl voneinander getrennte Kühlkanäle dadurch zu erzeugen, daß in der Kühlerstruktur gewellte Platten verwendet sind (US 4,387,962). Auch diese bekannte Konstruktion ist aufwendig und weist nicht die erforderliche Symmetrie auf.

Bekannt ist ferner ein gekühlter Spiegel für Laseranwendungen (DE 33 39 076 A1), dessen Kühlerstruktur extrem aufwendig ausgebildet ist und im wesentlichen aus einer Vielzahl von Pfosten besteht, die jeweils von der Unterseite einer die Spiegelfläche bildenden Platte wegstehen und zur Kühlung mit einem aus Düsenöffnungen austretenden Kühlmedium umströmt werden. Nachteilig ist auch hier die sehr aufwendige und daher teure Konstruktion sowie die fehlende symmetrische Ausbildung.

Bekannt ist weiterhin ein gekühlter Spiegel für Laseranwendungen (US 4,770,521), bei dem unmittelbar unterhalb einer die Spiegelfläche bildenden Schicht eine Kühlerstruktur gebildet ist. Hierfür ist die die Spiegelfläche bildende Schicht von einer weiteren, parallel zu dieser Schicht angeordneten Schicht durch eine Vielzahl von polygonartigen Abstandhaltem getrennt, so daß zwischen den beiden Schichten ein von einem Kühlmedium durchströmbarer Raum gebildet ist. Nachteilig ist bei diesem bekannten Kühler wiederum eine aufwendige und teure Konstruktion. Da die Distanzkörper unmittelbar mit der die Spiegelfläche bildenden Schicht verbunden sind, ist auch keine homogene Kühlung der Spiegelfläche erreicht.

Bekannt ist schließlich ein gekühlter Spiegel für Laseranwendungen (US 4,403,828), der aus einem sehr massiven Block besteht, welcher an seiner Oberseite mit mehreren, jeweils einen Kühlkanal bildenden Nuten versehen ist. Auf der Oberseite ist durch Anlöten an den Stegen der Nuten eine Platte befestigt, die die Spiegelfläche trägt. Nachteilig ist hier u. a. das hohe Gewicht des Spiegels, so daß dieser für sehr viele Anwendungen nicht geeignet ist. Weiterhin fehlt auch ein symmetrischer Aufbau.

Aufgabe der Erfindung ist es, einen gekühlten Spiegel für Laseranwendungen aufzuzeigen, dessen Spiegelfläche trotz eines einfachen Spiegelaufbaus eine hohe thermische und mechanische Stabilität besitzt. Zur Lösung dieser Aufgabe ist ein Spiegel entsprechend dem Patentanspruch 1 und ein Verfahren entsprechend dem Patentanspruch 14 ausgebildet.

Durch die erfindungsgemäße Konstruktion werden erhebliche Vorteile erreicht.

Zum einen ist die Kühlerstruktur in besonders einfacher Weise dadurch realisiert, daß eine Vielzahl von strukturierten, d. h. jeweils mit einer Vielzahl von Öffnungen versehenen Kupferschichten mittels des DCB-Prozesses flächig miteinander verbunden sind, und zwar u.a. derart, daß diese Öffnungen in den Kupferschichten vielfach verzweigte Wege für das Kühlmedium bilden und die Öffnungen umschließenden Stege der einzelnen Kupferschichten sich zu durchgehenden Pfosten aus Kupfer ergänzen. Diese Pfosten liegen mit ihrer Längserstreckung senkrecht Ebene der Spiegelfläche und erstrecken sich über die gesamte Dicke der Kühlerstruktur, d. h. ausgehend von einer der ersten Zwischenlage benachbarten Kupferschicht bis an die der zweiten Zwischenlage benachbarten Kupferschicht der Kühlerstruktur.

Durch diese Ausbildung wird nicht nur ein Kühlmediumstrom durch die Kühlerstruktur erreicht, der z.B. in allen drei senkrecht zueinander verlaufenden Raumachsen sich ständig verzweigt und in dem auch ständig neues Kühlmedium in die Nähe der die Spiegelfläche bildenden oder aufweisenden ersten Schicht gelangt, sondern durch die Pfosten wird auch eine hohe mechanische Festigkeit und Steifigkeit für den Spiegel insgesamt erzielt. Es kann somit nicht zu Verformungen der Spiegelfläche weder durch thermische Effekte, noch durch mechanische Kraft- und/oder Druckeinwirkung kommen. Insbesondere wird durch die Pfosten auch ein Aufblähen der Kühlerstruktur und damit ein Verformen der Spiegelfläche durch den Druck des Kühlmediums oder durch im Betrieb des Spiegels unvermeidbare Druckschwankungen des Kühlmediums vermieden.

Besonders vorteilhaft ist bei der Erfindung auch, daß der Spiegel bezüglich der senkrecht zur Spiegeloberfläche aufeinander folgenden Schichten völlig symmetrisch aufgebaut ist, Temperaturänderungen also nicht zu Verformungen der Spiegelfläche führen. Durch die unmittelbar an die erste Schicht mit der Spiegelfläche anschließende Zwischenlage aus dem Material mit dem reduzierten Wärmeausdehnungskoeffizienten wird nicht nur die thermische Stabilität der die Spiegelfläche aufweisenden oder bildenden ersten Schicht weiter verbessert, sondern durch diese Zwischenlage oder Zwischenschicht wird insbesondere auch eine gleichmäßige Kühlwirkung an der die Spiegelfläche aufweisenden oder bildenden ersten Schicht sichergestellt. Wie kritisch die mechanische Steifigkeit und Festigkeit eines Spiegels für Laseranwendungen ist, zeigt u.a. der Umstand, daß beispielsweise bereits das Umbiegen von Schläuchen zum Zuführen und Abführen des Kühlmediums zu Veränderungen an der Spiegelfläche und damit zu einer Beeinträchtigung der Qualität des Laserstrahls führen kann.

Durch die Anwendung der DCB-Technik sind Lotschichten zwischen den einzelnen Kupferschichten vermieden. Dies ist nicht nur wegen der Vermeidung einer Korrosionsgefahr wesentlich, sondern durch die DCB-Technik können feine Strukturen für die strukturierten, d. h. mit Löchern und Öffnungen versehenen Kupferschichten erreicht werden und damit eine große Homogenität bei der Kühlung der Spiegelfläche. Weiterhin ergibt sich durch die Anwendung der DCB-Technik auch eine hohe Festigkeit, da insbesondere Lotschichten, die unter Umständen weicher sind als das Kupfer der Kupferschichten, vermieden sind.

Ein ganz wesentlicher Vorteil der erfindungsgemäßen Konstruktion besteht aber darin, daß die Kühlerstruktur und damit auch der Spiegel insgesamt in beiden, die Ebene der Spiegelfläche bestimmenden Achsrichtungen an der Ober- oder Spiegelfläche dieselbe Festigkeit aufweist. Erst hierdurch ist eine einwandfreie Bearbeitung der Spiegelfläche überhaupt möglich. Die gleiche Steifigkeit des Spiegels in beiden die Spiegelfläche definierenden Raumachsen wird dadurch erreicht, daß die Kühlerstruktur aus den stapelartig übereinander angeordneten und flächig miteinander verbundenen strukturierten, d. h. mit Öffnungen versehenen Kupferschichten besteht und keine nutenförmigen Kühlkanäle verwendet sind.

Der DCB-Prozess verbessert weiterhin die Verarbeitbarkeit des Kupfers beim Herstellen der Spiegelfläche, d. h. es wird eine Texturierung des Kupfers erreicht, was dann eine wesentlich gleichmäßigere Oberflächenbehandlung erlaubt.

Die Herstellung der Spiegelfläche erfolgt bei der Erfindung durch entsprechende Bearbeitung der der Kühlerstruktur abgewandten Oberflächenseite der ersten Schicht, und zwar bevorzugt durch eine spanabhebende Bearbeitung mittels eines Werkzeugs mit definierter Schneide, und dabei bevorzugt mittels eines Diamant-Werkzeugs. Das entsprechende Verfahren wird auch als Diamond-Turning-Verfahren bezeichnet.

Als Kupfer wird bei dem erfindungsgemäßen Spiegel vorzugsweise sauerstofffreies Kupfer verwendet. Hierdurch wird die Lebensdauer der Spiegelfläche wesentlich vergrößert, da die Korrosionsbeständigkeit erhöht wird.

Bei der erfindungsgemäßen Ausbildung wird durch die erste Zwischenschicht aus dem Material mit dem reduzierten Wärmeausdehnungskoeffizienten, die (Zwischenschicht) unmittelbar an die die Spiegelfläche aufweisende oder bildende erste Schicht aus Kupfer anschließt, eine hohe thermische Stabilität für die Spiegelfläche erreicht, so daß beispielsweise durch Änderung der Laserleistung und/oder durch An- und Abschalten des Laser bedingte Temperaturschwankungen nicht zu einer störenden Verformung oder Veränderung der Spiegelfläche führen.

Zur Vermeidung eines Bimetall-Effektes, d. h. eines Verwölbens des Spiegels und insbesondere der von der Oberseite gebildeten Spiegelfläche bei Temperaturschwankungen, ist der mehrschichtige Spiegelkörper symmetrisch zu einer Mittelebene ausgeführt und besitzt daher an eine die Unterseite des Spiegels bildende zweite Schicht aus Kupfer anschließend eine zweite Zwischenschicht aus dem Material mit dem reduzierten Wärmeausdehnungskoeffizienten.

Für die wenigstens eine Zwischenschicht aus dem Material mit dem reduzierten Wärmeausdehnungskoeffizienten kann auch ein Material, beispielsweise Keramik gewählt werden, mit welchem zugleich eine Verbesserung der Festigkeit des Spiegels erreicht wird.

Wie beschrieben wird die Kühlerstruktur von mehreren, aneinander anschließenden Kühlerschichten gebildet, die dann so strukturiert sind, daß sie einen Kühler- oder Kühlerstrukturbereich mit fein strukturierten Kanälen für das Kühlmedium bilden, die sich ständig in wenigstens zwei, vorzugsweise in drei senkrecht zueinander verlaufenden Raumachsen verzweigen. Durch die die Kühlerstruktur überbrückende durchgehende Pfosten wird nicht nur die Kühlwirkung verbessert, sondern diese Pfosten gewährleisten erforderliche mechanische Festigkeit und Steifigkeit, insbesondere auch Druckfestigkeit des Spiegels im Bereich der Kühlerstruktur, auch bei Verwendung des wegen seiner hohen Wärmeleitfähigkeit an sich günstigen Kupfers oder einer Kupferlegierung für die Kühlerschichten.

Weiterbildungen der Erfindung sind Gegenstand der Unteransprüche. Die Erfindung wird im Folgenden anhand der Figuren an einem Ausführungsbeispiel näher erläutert. Es zeigen:

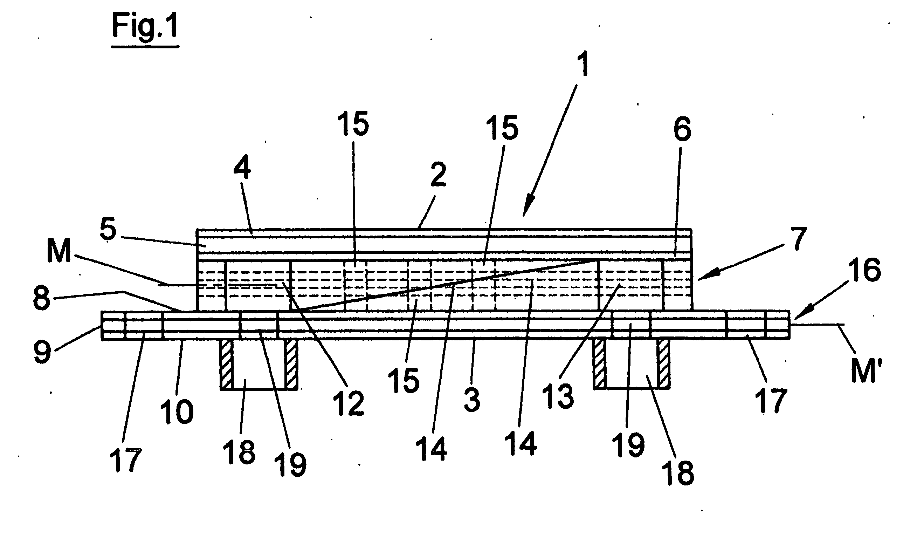

- Fig. 1: in vereinfachter Darstellung und in Seitenansicht einen Spiegel für Laseranwendungen gemäß der Erfindung;

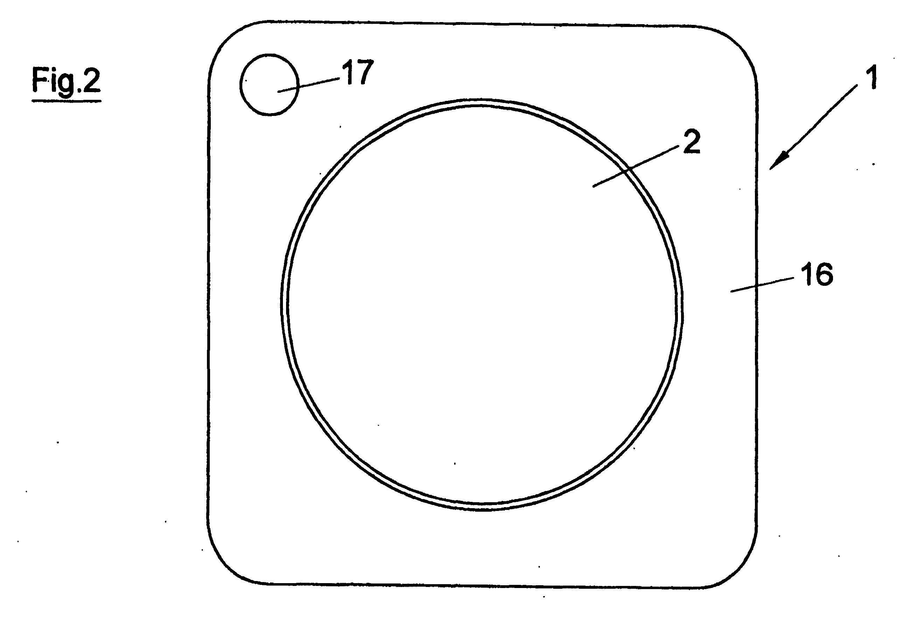

- Fig. 2: den Spiegel der Figur 1 in Draufsicht;
- Fig. 3: in Draufsicht eine mögliche Ausführungsform einer strukturierten Kühlerlage zur Verwendung bei dem gekühlten Laserspiegel der Figuren 1 und 2;
- Fig. 4: in Draufsicht das von zwei aneinander anschließenden Kühlerlagen gebildete Layout.

Der in den Figuren allgemein mit 1 bezeichnete Spiegel ist zur Verwendung in Hochleistungslasem zum Umlenken des Laserstrahles bestimmt. Der Spiegel 1 ist mehrschichtig mit einer Vielzahl von Schichten aufgebaut, die in geeigneter Weise flächig miteinander verbunden sind. Im einzelnen weist der Spiegel 1 den nachstehend angegebenen Aufbau auf, wobei die verschiedenen Bereiche und Schichten ausgehend von der Spiegeloberseite 2 in Richtung der Spiegelunterseite 3 in der nachstehend angegebenen Reihenfolge aneinander anschließen:
- Obere Kupferschicht 4, die an ihrer freien Oberseite 2 die Spiegelfläche bildet;
- Zwischenschicht 5;
- Obere Kupfer- oder Abschlußschicht 6 für die darunterliegende Kühlerstruktur 7;
- Untere Kupfer- oder Abschlußschicht 8 für die Kühlerstruktur 7;
- Zwischenschicht 9;
- Untere Kupferschicht 10, die die Unterseite 3 des Spiegels 1 bildet.

Die Zwischenschichten 5 und 9 bestehen aus einem Material, welches einen im Vergleich zu dem Kupfer der Kupferschichten sehr viel kleineren Wärmeausdehnungskoeffizienten aufweist, nämlich in der Größenordnung gleich oder kleiner 10 x 10⁻⁶ [1/K]. Die Zwischenschichten 5 und 9 bestehen bevorzugt aus dem selben Material.

Die Kühlerstruktur 7 besteht aus einer Vielzahl von flächig miteinander verbundenen Kupferschichten 11, die mit ihren Oberflächenseiten ebenfalls parallel zur Oberseite 2 bzw. Unterseite 3 des Spiegels 1 liegen.

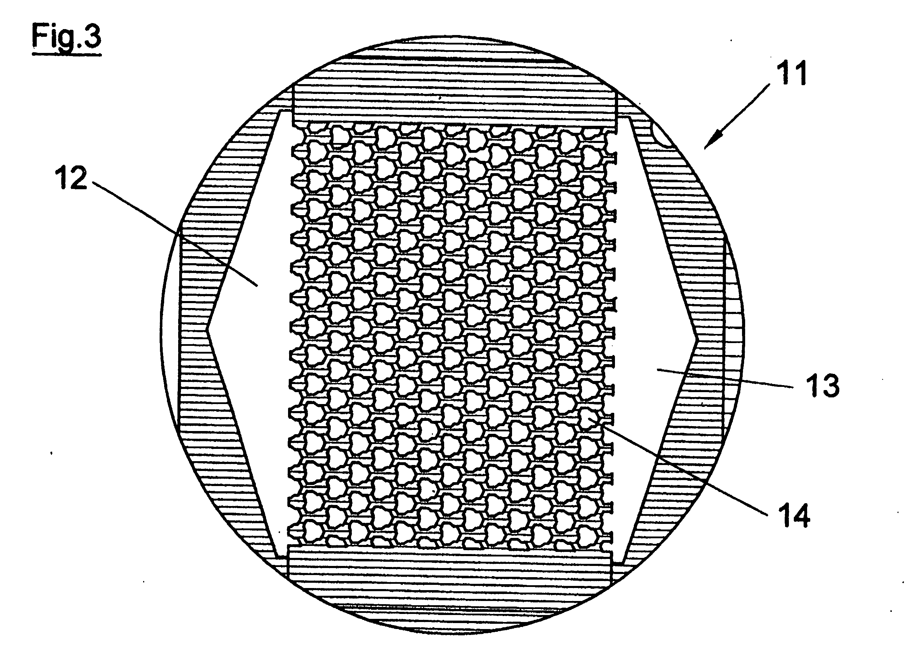

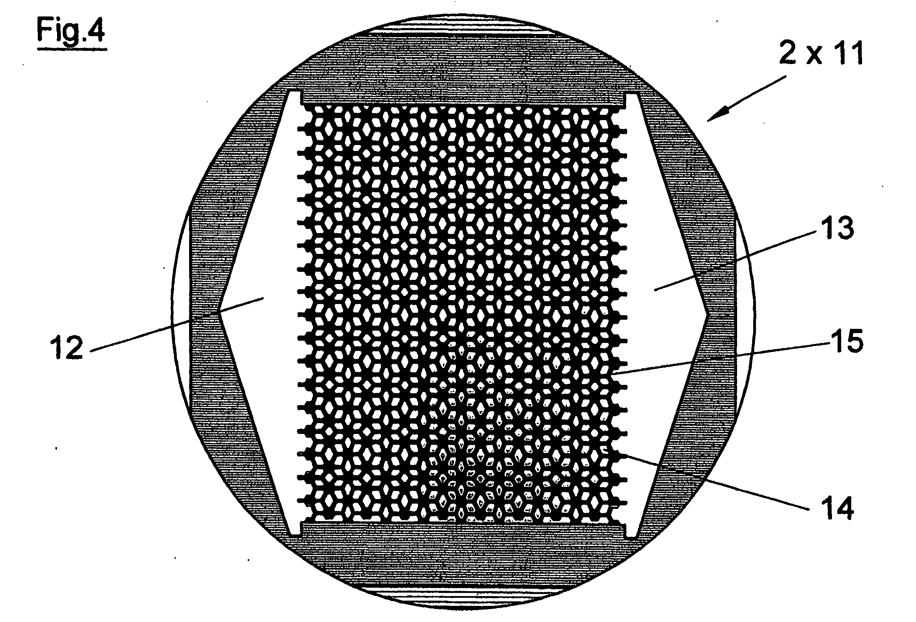

Entsprechend den Figuren 3 und 4 sind diese Kühlerschichten 11 so strukturiert, d.h. mit einer Vielzahl von Öffnungen 11' bzw. 11" und diese Öffnungen umgebenden Materialstegen versehen, daß sie zwei Kammern 12 bzw. 13 zum Zuführen und Abführen eines vorzugsweise flüssigen Kühlmediums, beispielsweise Wasser, und zwischen diesen Kammern einen Kühlbereich 14 mit von den Öffnungen 11' gebildeten fein strukturierten Strömungswegen für das Kühlmedium bilden, die (Strömungswege) sich ständig in allen drei senkrecht zueinander verlaufenden Raumachsen verzweigen, so daß das Strömungsmedium diesen Kühlbereich 14 unter ständigem Umlenken in allen drei Raumachsen durchströmt und hierdurch eine intensive Kühlwirkung erreicht wird.

Die Kühlerlagen 11 sind weiterhin auch so strukturiert, daß durch ihre Strukturierung bzw. durch Abschnitte der die Öffnungen 11' umgebenden Materialstege der aneinander anschließenden Kühlerlagen durchgehende Pfosten 15 aus dem Kupfer dieser Kühlerlagen 11 gebildet sind, die mit ihrer Längserstreckung senkrecht zu den Ebenen der Schichten des Spiegels 1 orientiert und ebenso wie die von diesen Pfosten 15 flügelartig wegstehenden verbliebenen Materialbereiche der strukturierten Kühlerlagen 11 von dem Kühlmedium intensiv umströmt werden. Die Pfosten 15 dienen zum einen zum wirksamen Einleiten der abzuführenden Wärme in den Kühlbereich 14 bzw. in das Kühlmedium. Zum anderen sind die Pfosten 15 auch erforderlich für die mechanische Festigkeit des Spiegels, insbesondere auch um ein Aufblähen der Kühlerstruktur 7 und damit des Spiegels 1 insgesamt bzw. ein Verwölben der von der Oberseite 2 gebildeten Spiegelfläche durch das unter Druck stehende Kühlmedium zu vermeiden. Der gegenseitige Abstand der Pfosten 15 beträgt beispielsweise 1,0-8 mm, wobei der Durchmesser dieser Pfosten etwa den halben Abstand dieser Pfosten entspricht.

Bei der dargestellten Ausführungsform sind die Schichten 4, 6, 8 und 10 sowie auch die Kühlerlagen 11 jeweils von einer Kupferfolie gebildet. Die Zwischenschichten 5 und 9 bestehen aus Keramik, beispielsweise aus einer Aluminiumoxid- oder Aluminiumnitrid-Keramik. Die Zwischenschichten 5 und 9 können auch aus einem Metallmatrix-Verbundmaterial mit dem Wärmeausdehnungskoeffizienten gleich oder kleiner 10 x 10⁻⁶ [1/K] bestehen, z.B. aus Kupfer-Silizium-Karbid oder Aluminiumsiliziumkarbid.

Sind die Zwischenschichten 5 und 9 solche aus Keramik, insbesondere Aluminiumoxid-Keramik, so sind die einzelnen Schichten in besonders einfacher Weise unter Verwendung der dem Fachmann bekannten und z.B. in der US-PS 37 44 120 oder in der DE-PS 23 19 854 beschriebenen DCB-Technik (Direct-Copper-Bond-Technology) flächig miteinander zu verbinden. Ein anderes geeignetes Verfahren zum Verbinden der Schichten ist das Aktiv-Lötverfahren.

Wie die Figuren zeigen, sind bei der dargestellten Ausführungsform die Schichten 4 - 6 sowie auch die Kühlerschichten 11 mit einem kreisförmigen Zuschnitt mit dem selben Durchmesser ausgeführt, so daß der von diesen Schichten gebildete Teil des Spiegels 1 die Form eines flachen Kreiszylinders aufweist. Die Kupferschichten 8 und 10 sowie die Zwischenschicht 9 sind bei der dargestellten Ausführungsform jeweils quadratisch mit den selben Kantenabmessungen gefertigt, die größer sind als der Durchmesser der kreisförmigen Schichten 4 - 6 und 11. Die Schichten 8 - 10 bilden somit einen über den übrigen Umfang des Spiegels 1 gleichmäßig wegstehenden Flansch 16 mit quadratischen Querschnitt, der achsgleich mit der Achse des kreiszylinderförmigen Teils des Spiegels 1 angeordnet ist. Im Bereich der Ecken sind im Flansch 16 Befestigungsöffnungen 17 vorgesehen, mit denen der Spiegel dann an einem nicht dargestellten Halter befestigt werden kann.

An der Unterseite 3 sind Anschlüsse 18 vorgesehen, und zwar jeweils ein Anschluß 18 für eine der Kammern 12 bzw. 13. Diese Anschlüsse, die ebenfalls aus Kupfer bestehen, sind in geeigneter Weise, beispielsweise unter Verwendung des DCB-Verfahrens an der Schicht 10 befestigt. Für jeden Anschluß 18 ist weiterhin in den Schichten 8 - 10 jeweils eine durchgehende Bohrung 19 vorgesehen, durch die der Anschluß 18 mit seiner Kammer 12 bzw. 13 in Verbindung steht. Im Verwendungsfall des Spiegels 1 sind die Anschlüsse 18 an einem Vorlauf bzw. Rücklauf für das Kühlmedium angeschlossen.

Die Zwischenschicht 5 aus dem Material mit dem reduzierten Wärmeausdehnungskoeffizienten, beispielsweise aus Keramik, dient im wesentlichen dazu, die tatsächliche Wärmeausdehnung der Schicht 4, beispielsweise bedingt durch ein Ein- und Ausschalten des vom Spiegel 1 reflektierten Laserstrahls oder durch Änderungen der Leistung dieses Laserstrahls und/oder durch Schwankungen des Kühlmediumdurchsatzes usw. so stark zu reduzieren, daß die Qualität und Funktion des Spiegels 1 durch Temperaturschwankungen in der Schicht 4 nicht beeinträchtigt werden. Um dies sicherzustellen, ist die Dicke der Zwischenschicht 5 größer als die Dicke der Schicht 4. Vorzugsweise liegt die Dicke der Schicht 5 in der Größenordnung zwischen etwa 0,2 und 5 mm und die Dicke der Schicht 4 in der Größenordnung zwischen etwa 0,1 und 0,6 mm.

Der Spiegel 1 ist weiterhin zu einer gedachten Mittelebene M, die parallel zu der Oberseite 2 bzw. Unterseite 3 und auch parallel zu den Schichten 4 - 6, 8 - 10 und 11 liegt und die etwa in der Mitte der Kühlerstruktur 7 verläuft, in Bezug auf die Schichtfolge und die für diese Schichten verwendeten Materialien symmetrisch ausgebildet. Aus diesem Grunde ist auch zwischen der die Unterseite 3 bildenden Kupferschicht 10 und der die Kühlerstruktur 7 unten abschließenden Kupferschicht 8 die Zwischenschicht 9 vorgesehen, die aus dem selben Material wie die Schicht 5 besteht und auch die gleiche Dicke aufweist wie die Schicht 5. Weiterhin besitzt die Schicht 10 die gleiche Dicke wie die Schicht 4 und die zwischen den Schichten 5 und 9 vorgesehenen Schichten beidseitig von der Mittelebene M jeweils die selbe Dicke.

Aus Gründen der vereinfachten Fertigung sind sämtliche Kupferschichten 4, 6, 8, 10 und 11 jeweils aus einem Kupfer-Flachmaterial oder einer Kupferfolie gleicher Dicke hergestellt. Durch den zur Mittelebene M symmetrischen Aufbau wird auch der "Bimetall-Effekt" vermieden.

Der Flansch 16 ist bei der dargestellten Ausführungsform in sich symmetrisch ausgeführt, und zwar zur Mittelebene M' der Zwischenschicht 9, d.h. die beidseitig von dieser Zwischenschicht vorgesehenen Kupferschichten 8 und 10 besitzen die selbe Dicke. Diese symmetrische Ausbildung des Flansches zu der Mittelebene M' vermeidet im Verwendungsfall bei Temperaturschwankungen eine Verwölbung des Flansches 16 und damit eine Veränderung des Justage des Spiegels 1. Durch die Zwischenschicht 9 aus Keramik wird für den Flansch 16 weiterhin auch eine ausreichende mechanische Festigkeit erreicht, und zwar trotz Verwendung der Schichten 8 und 10 aus Kupfer.

Die Oberseite 2 ist zur Bildung einer Spiegelfläche bearbeitet, d.h. beispielsweise poliert und/oder diamantgefräst, und zwar derart, daß die Rauheit kleiner als 10nm beträgt und auch Abweichungen in der Planität auf jeden Fall kleiner als 1 µm sind.

Zur Veredelung der Spiegelfläche und/oder zur Verbesserung der Eigenschaften, insbesondere auch der optischen Eigenschaften (Reflektionseigenschaften) dieser Spiegelfläche kann dann auf die so behandelte Oberseite 2 eine weitere dünne Schicht aus Metall (Edelmetall), wie z.B. aus Ni, Au, Ag, Pt, Pd oder aus einer Legierung aufgebracht werden, und zwar beispielsweise mit einer Dicke von 0,1 bis 20 µm.

Bei der vorbeschriebenen Ausführungsform besteht die Schichten 4 und aus Symmetriegründen dann auch die Schichten 6, 8, 10 und 11 aus Kupfer, da sich dieses Material besonders leicht bearbeiten läßt, eine hohe Wärmeleitfähigkeit aufweist und damit eine optimale Kühlung des Spiegels 1 an der Spiegelfläche gewährleistet, und da Kupfer insbesondere auch für die übliche Laser-Lichtwellenlänge ein gutes Reflexionsverhalten besitzt.

Für die Schichten 4, 6, 8, 10 und 11 wird bevorzugt ein sauerstoffarmes oder sauerstofffreies Kupfer verwendet, wodurch sich eine wesentliche Verbesserung der Lebensdauer der Spiegelfläche ergibt. Zur Erzeugung der Spiegelfläche wird die Schicht 4 an ihrer den übrigen Schichten abgewandten Oberflächenseite spanabhebend bearbeitet bzw. gefräst, und zwar unter Verwendung eines spanabhebenden Werkzeugs mit wenigstens einer definierten Schneide, beispielsweise mit einem Diamant-Werkzeug, so daß auch von einer diamantgefrästen Spiegelfläche gesprochen werden kann. Für die Bearbeitung eignet sich das an sich bekannte "Diamond-Turning-Verfahren".

Die Erfindung wurde voranstehend an einem Ausführungsbeispiel beschrieben. Es versteht sich, daß zahlreiche Änderungen und Abwandlungen im Rahmen der beiliegende Ansprüche möglich sind. So besteht die Möglichkeit, daß auf die Spiegelfläche zum Schutz und/oder zur optischen Vergütung eine Hart- und/oder Vergütungsschicht z.B. aus Diamant aufgebracht ist, beispielsweise durch physikalisches Abscheiden im Vakuum (PVD). So ist es beispielsweise weiterhin auch möglich, daß einzelne Schichten des Spiegels jeweils von wenigstens zwei flächig aneinander anschließenden und miteinander verbundenen Einzelschichten bestehen.

### Bezugszeichenliste

- 1: Laserspiegel
- 2: Oberseite
- 3: Unterseite
- 4: Schicht aus Kupfer
- 5: Schicht aus einem Material mit reduziertem Wärmeausdehnungskoeffizienten
- 6: Schicht aus Kupfer
- 7: Kühlerstruktur
- 8: Schicht aus Kupfer
- 9: Schicht aus einem Material mit reduziertem Wärmeausdehnungskoeffizienten
- 10: Schicht aus Kupfer
- 11: Kühlerlage
- 11', 11": Öffnungen
- 12, 13: Kammer
- 14: Strukturierung
- 15: Pfosten
- 16: Flansch
- 17: Befestigungsöffnung
- 18: Anschluß
- 19: Bohrung

## Patentansprüche

1. Gekühlter Spiegel für Laseranwendungen, mit einem eine Spiegelfläche aufweisenden Spiegelkörper, der aus mehreren stapelartig aneinander anschließenden und flächig miteinander verbundenen Schichten (4, 6; 8 - 10, 11) besteht und eine Kühlerstruktur (7) mit Anschlüssen (8) zum Zuführen und Abführen eines Kühlmediums besitzt, wobei eine die Oberseite (2) des Spiegels bildende erste Schicht (4) die Spiegelfläche aufweist oder bildet, **dadurch gekennzeichnet,**
**daß** an die erste Schicht (4) unmittelbar anschließend eine erste Zwischenlage (5) vorgesehen ist, die aus einem Material mit reduziertem Wärmeausdehnungskoeffizienten gleich oder kleiner 10 x 10⁻⁶ [1/K] besteht,
**daß** die der ersten Schicht abgewandte Unterseite aus einer zweiten Schicht (10) besteht und dieser zweiten Schicht unmittelbar benachbart eine zweite Zwischenschicht (9) aus dem Material mit dem reduzierten Wärmeausdehnungskoeffizienten vorgesehen ist,
**daß** die zwischen der ersten und zweiten Zwischenlage (5, 9) vorgesehene Kühlerstruktur von einer Vielzahl von Kühlerschichten (11) gebildet ist, die derart strukturiert, d.h. mit einer Vielzahl von Öffnungen versehen sind, daß Bereiche der die Öffnungen (11, 11') umgebenden Materialabschnitte der Kühlerstrukturschichten (11) durchgehende Pfosten (15) bilden, die sich in einer Achsrichtung senkrecht oder quer zur Spiegelfläche über die gesamte Dicke der Kühlerstruktur erstrecken, daß die erste Schicht (4), die zweite Schicht (10) sowie die die Kühlerstruktur bildenden Schichten (6, 8, 11) jeweils aus Kupfer bestehen, und
**daß** sämtliche Schichten des Spiegels unter Anwendung des DCB-Prozesses oder durch Aktiv-Löten flächig miteinander verbunden sind.

2. Spiegel nach Anspruch 1, **dadurch gekennzeichnet, daß** beidseitig von den strukturierten Kühlerstrukturschichten (11) jeweils wenigstens eine nicht strukturierte Abschlußschicht (6, 8) aus Kupfer vorgesehen ist.

3. Spiegel nach einem der vorhergehenden Ansprüche, **dadurch gekennzeichnet, daß** der Spiegekörper hinsichtlich der Schichten und der für diese Schichten verwendeten Materialien symmetrisch zu einer zwischen der Spiegeloberseite (2) und der Spiegelunterseite (3) verlaufenden Mittelebene (M) ausgebildet ist.

4. Spiegel nach Anspruch 1 oder 2, **dadurch gekennzeichnet, daß** die Zwischenschichten aus Keramik, vorzugsweise Aluminiumoxid-, Aluminiumnitridoder Siliziumkarbid-Keramik, oder aus Kupfer-Silizium-Karbid oder aus Aluminium-Silizium-Karbid bestehen.

5. Spiegel nach einem der vorhergehenden Ansprüche, **dadurch gekennzeichnet, daß** die Zwischenschichten (5, 9) eine Dicke aufweisen, die größer ist als die Dicke der ersten und zweiten Schicht (4, 10) aus Kupfer,
wobei beispielsweise die Zwischenschichten (5, 9) eine Dicke im Bereich von etwa 0,2 - 5 mm aufweisen und/oder die erste Schicht (4) aus Kupfer eine Dicke im Bereich 0,1 - 0,6 mm aufweist.

6. Spiegel nach einem der vorhergehenden Ansprüche, **dadurch gekennzeichnet, daß** die die Unterseite des Spiegels (3) bildende zweite Schicht (10) Bestandteil eines über den sonstigen Umfang des Spiegels (1) vorstehenden Flansches (16) ist,
wobei beispielsweise der Flansch (16) wenigstens dreischichtig ausgebildet ist, und zwar bestehend aus der zweiten Schicht (10) aus Kupfer, aus der an diese zweite Schicht unmittelbar anschließenden zweiten Zwischenschicht (9) sowie aus einer weiteren Schicht (8) aus Kupfer an der der zweiten Schicht (10) abgewandten Seite der zweiten Zwischenschicht (9), und/oder
wobei beispielsweise der Flansch (16) hinsichtlich der diesen Flansch bildenden Schichten und der verwendeten Materialien symmetrisch zu einer parallel zur Spiegelunterseite (3) verlaufenden Flanschmittelebene (M') ausgebildet ist.

7. Spiegel nach einem der vorhergehenden Ansprüche, **dadurch gekennzeichnet, daß** der gegenseitige Abstand der Pfosten etwa 1,0 bis 8,0 mm beträgt.

8. Spiegel nach einem der vorhergehenden Ansprüche, **dadurch gekennzeichnet, daß** die strukturierten Kühlerschichten (11) zu den Pfosten (15) radial verlaufende und von diesen wegstehende Materialabschnitte oder Flügel bilden.

9. Spiegel nach einem der vorhergehenden Ansprüche, **dadurch gekennzeichnet, daß** die erste Schicht (4) an ihrer Oberfläche diamantgefräst ist, und zwar vorzugsweise derart, daß die Rauheit kleiner als 10nm und Abweichungen von der Planität kleiner als 1µm betragen.

10. Spiegel nach einem der vorhergehenden Ansprüche, **dadurch gekennzeichnet, daß** auf die Oberseite der ersten Schicht (4) zur Bildung der Spiegelfläche eine Oberflächenmetallschicht, beispielsweise eine Schicht aus Ni, Au, Ag, Pt, Pd oder einer Metall-Legierung aufgebracht ist,
wobei beispielsweise die Oberflächenmetallschicht eine Dicke aufweist, die deutlich kleiner ist als die Dicke der ersten Schicht, beispielsweise eine Dicke von 0,1 bis 20 µm.

11. Spiegel nach einem der vorhergehenden Ansprüche, **gekennzeichnet durch** Anschlüsse (18) an der der Spiegelfläche abgewandten Unterseite (3) des Spiegels zum Zuführen und Abführen des Kühlmediums.

12. Spiegel nach einem der vorhergehenden Ansprüche, **dadurch gekennzeichnet, daß** das Kupfer der Kupferschichten (4, 6, 8, 10, 11) eine Kupferlegierung und/oder ein sauerstoff-armes oder -freies Kupfer ist.

13. Spiegel nach einem der vorhergehenden Ansprüche, **dadurch gekennzeichnet, daß** wenigsten eine Schicht (4, 5, 6, 8, 9, 10, 11) aus wenigstens zwei flächig an einander anschließenden und mit einander verbundenen Einzelschichten besteht.

14. Verfahren zum Herstellen eines Spiegels nach einem der vorhergehenden Ansprüche, **dadurch gekennzeichnet, daß** die den Spiegelkörper bildenden Schichten (4 - 6; 8 - 10), einschließlich der strukturierten, die Kühlerstruktur bildenden Kühlerschichten (11) übereinandergestapelt und dann unter Verwendung des DCB-Prozesses oder durch Aktivlöten miteinander verbunden werden, und daß nach diesem Fügeprozeß die freiliegende Oberflächenseite der die Oberseite des Spiegels bildenden ersten Schicht aus Kupfer diamantgefräst wird.

## Claims

1. Cooled mirror for laser applications, with a mirror body which has a mirror surface and which comprises several layers (4, 6; 8-10, 11) which adjoin one another in the manner of a stack and which are connected to one another over their surfaces, and which has a cooler structure (7) with connections (8) for supplying and draining a coolant medium, wherein a first layer (4) that forms the upper surface (2) of the mirror has or forms the mirror surface,
**characterised in that**
a first intermediate layer (5) is provided, which follows on directly from the first layer (4), and which comprises a material with a reduced thermal expansion coefficient that is less than or equal to 10 x 10⁻⁶ [1/K],
that the underside facing away from the first layer comprises a second layer (10), and provided adjacent to this second layer is a second intermediate layer (9) of the material with the reduced thermal expansion coefficient,
that the cooler structure provided between the first and second intermediate layer (5, 9) is formed by numerous cooler layers (11) which are structured in such a way, i.e. are equipped with numerous openings, that areas of the material sections of the cooler structure layers (11) which [material sections] surround the openings (11, 11') form continuous posts (15) which extend in an axial direction perpendicular or crosswise to the mirror surface over the whole thickness of the cooler structure,
that the first layer (4), the second layer (10) and the layers (6, 8, 11) that form the cooler structure respectively comprise copper, and
that all the layers of the mirror are joined to one another over their surfaces, using the DCB process or through active soldering.

2. Mirror in accordance with claim 1, **characterised in that** provided on both sides of the structured cooler structure layers (11), there is in each case a non-structured concluding layer (6, 8) of copper.

3. Mirror in accordance with one of the preceding claims, **characterised in that** with regard to the layers and the materials used for these layers, the mirror body is designed symmetrically to a central plane (M) that runs between the upper surface (2) of the mirror and the underside (3) of the mirror).

4. Mirror in accordance with claim 1 or 2, **characterised in that** the intermediate layers comprise ceramic material, preferably aluminium oxide ceramic, aluminium nitride ceramic or silicon carbide ceramic, or copper silicon carbide or aluminium silicon carbide.

5. Mirror in accordance with one of the preceding claims, **characterised in that** the intermediate layers (5, 9) are of a thickness that is greater than the thickness of the first and second layer (4, 10) of copper, wherein for example the intermediate layers (5, 9) are of a thickness in the region of about 0.2-5 mm and/or the first layer (4) of copper is of a thickness in the region of 0.1-0.6 mm.

6. Mirror in accordance with one of the preceding claims, **characterised in that** the second layer (10) which forms the underside of the mirror (3) is a constituent part of a flange (16) that projects over the remaining periphery of the mirror (1),
wherein for example the flange (16) is designed to have at least three layers, namely comprising the second layer (10) of copper, the second intermediate layer (9) that follows on immediately from this second layer, as well as a further layer (8) of copper on that side of the second intermediate layer (9) that faces away from the second layer (10), and/or
wherein for example with regard to the layers that form this flange and the materials used, the flange (16) is designed symmetrically to a flange central plane (M') that runs parallel to the mirror underside (3).

7. Mirror in accordance with one of the preceding claims, **characterised in that** the mutual distance between the posts is approximately 1.0 to 8.0 mm.

8. Mirror in accordance with one of the preceding claims, **characterised in that** the structured cooler layers (11) form material sections or wings that run radially to the posts (15) and project away from them.

9. Mirror in accordance with one of the preceding claims, **characterised in that** the first layer (4) is diamond-milled on its surface, namely preferably in such a way that the roughness is less than 10 nm and deviations from the planity are less than 1 µm.

10. Mirror in accordance with one of the preceding claims, **characterised in that** applied to the upper surface of the first layer (4), to form the mirror surface, there is a surface metal layer, for example a layer ofNi, Au, Ag, Pt, Pd or a metal alloy,
wherein for example the surface metal layer is of a thickness that is clearly smaller than the thickness of the first layer, for example a thickness of 0.1 to 20 µm.

11. Mirror in accordance with one of the preceding claims, **characterised by** connections (18) on the mirror underside (3) that faces away from the mirror surface, for the supply and drainage of the coolant medium.

12. Mirror in accordance with one of the preceding claims, **characterised in that** the copper of the copper layers (4, 6, 8, 10, 11) is a copper alloy and/or a low-oxygen or oxygen-free copper.

13. Mirror in accordance with one of the preceding claims, **characterised in that** at least one layer (4, 5, 6, 8, 9, 10, 11) comprises at least two individual layers that adjoin one another over their surfaces and are connected to one another.

14. Method for producing a mirror in accordance with one of the preceding claims, **characterised in that** the layers (4-6; 8-10) that form the mirror body, including the structured cooler layers (11) that form the cooler structure, are stacked on top of one another and then joined to one another using the DCB process or through active soldering, and that after this joining process, the exposed surface of the first layer of copper which forms the upper surface of the mirror is diamond-milled.

## Revendications

1. Miroir refroidi pour applications laser, comprenant un corps de miroir présentant une surface de miroir, ledit corps étant composé de plusieurs couches (4, 6; 8-10, 11) empilées l'une sur l'autre et reliées entre elles à plat et ayant une structure réfrigérante (7) avec des raccords (8) pour acheminer et évacuer un agent réfrigérant, une première couche (4), qui forme la face supérieure (2) du miroir, présentant ou formant la surface du miroir, **caractérisé en ce qu'**il est prévu, directement jointe à la première couche (4), une première couche intermédiaire (5) qui est constituée d'un matériau ayant un coefficient de dilatation thermique réduit égal ou inférieur à 10 x 10⁻⁶ [1/K], **en ce que** la face inférieure opposée à la première couche est constituée d'une deuxième couche (10) et **en ce qu'**il est prévu, au voisinage direct de cette deuxième couche, une deuxième couche intermédiaire (9) constituée du matériau ayant le coefficient de dilatation thermique réduit, **en ce que** la structure réfrigérante prévue entre la première et la deuxième couche intermédiaire (5, 9) est formée d'une pluralité de couches réfrigérantes (11) qui sont structurées, c'est-à-dire pourvues d'une pluralité d'ouvertures, de manière que des zones des sections de matériau des couches de la structure réfrigérante entourant les ouvertures (11, 11') forment des montants traversants (15) qui s'étendent dans une direction axiale perpendiculairement ou transversalement à la surface du miroir sur toute l'épaisseur de la structure réfrigérante, **en ce que** la première couche (4), la deuxième couche (10) ainsi que les couches (6, 8, 11) formant la structure réfrigérante sont constituées respectivement de cuivre et **en ce que** toutes les couches du miroir sont reliées entre elles à plat en utilisant le procédé DCB ou par brasage actif.

2. Miroir selon la revendication 1, **caractérisé en ce qu'**il est prévu des deux côtés des couches (11) de la structure réfrigérante structurée, respectivement, au moins une couche de fermeture non structurée (6, 8) en cuivre.

3. Miroir selon l'une quelconque des revendications précédentes, **caractérisé en ce que** le corps de miroir, en ce qui concerne les couches et les matériaux utilisés pour ces couches, présente une symétrie par rapport à un plan central (M) s'étendant entre la face supérieure (2) du miroir et la face inférieure (3) du miroir.

4. Miroir selon la revendication 1 ou 2, **caractérisé en ce que** les couches intermédiaires sont constituées de céramique, de préférence de céramique d'oxyde d'aluminium, de céramique de nitrure d'aluminium ou de céramique de carbure de silicium, ou de carbure de cuivre et de silicium ou encore de carbure d'aluminium et de silicium.

5. Miroir selon l'une quelconque des revendications précédentes, **caractérisé en ce que** les couches intermédiaires (5, 9) présentent une épaisseur qui est plus grande que l'épaisseur de la première et de la deuxième couche (4, 10) en cuivre, les couches intermédiaires (5, 9) présentant, par exemple, une épaisseur dans la plage d'environ 0,2 à 5 mm et/ou la première couche (4) en cuivre présentant une épaisseur dans la plage de 0,1 à 0,6 mm.

6. Miroir selon l'une quelconque des revendications précédentes, **caractérisé en ce que** la deuxième couche (10) formant la face inférieure (3) du miroir fait partie d'une bride (16) faisant saillie de la périphérie restante du miroir (1), la bride (16) se présentant, par exemple, sous la forme d'au moins trois couches, celles-ci étant constituées de la deuxième couche (10) en cuivre, de la deuxième couche intermédiaire (9) se joignant directement à cette deuxième couche ainsi que d'une autre couche (8) en cuivre sur la face de la deuxième couche intermédiaire (9) opposée à la deuxième couche (10), et/ou la bride (16), en ce qui concerne les couches formant cette bride et les matériaux utilisés, présentant, par exemple, une symétrie par rapport à un plan central (M') de la bride s'étendant parallèlement à la face inférieure (3) du miroir.

7. Miroir selon l'une quelconque des revendications précédentes, **caractérisé en ce que** la distance mutuelle des montants est d'environ 1,0 à 8,0 mm.

8. Miroir selon l'une quelconque des revendications précédentes, **caractérisé en ce que** les couches réfrigérantes structurées (11) forment des sections ou ailes de matériau s'étendant radialement par rapport aux montants (15) et s'écartant de ceux-ci.

9. Miroir selon l'une quelconque des revendications précédentes, **caractérisé en ce que** la première couche (4) est fraisée au diamant sur sa face supérieure et ce, de préférence de sorte que la rugosité soit inférieure à 10 nm et que les écarts par rapport à la planéité soient inférieurs à 1 µm.

10. Miroir selon l'une quelconque des revendications précédentes, **caractérisé en ce que**, sur la face supérieure de la première couche (4) est appliquée, pour former la surface du miroir, une couche métallique superficielle, par exemple une couche de Ni, Au, Ag, Pt, Pd ou d'un alliage de métaux, la couche métallique superficielle présentant, par exemple, une épaisseur qui est nettement plus faible que l'épaisseur de la première couche, par exemple une épaisseur de 0,1 à 20 µm.

11. Miroir selon l'une quelconque des revendications précédentes, **caractérisé par** des raccords (18) sur la face inférieure (3) du miroir opposée à la surface du miroir pour acheminer et évacuer l'agent réfrigérant.

12. Miroir selon l'une quelconque des revendications précédentes, **caractérisé en ce que** le cuivre des couches de cuivre (4, 6, 8, 10, 11) est un alliage de cuivre et/ou un cuivre pauvre en oxygène ou exempt d'oxygène.

13. Miroir selon l'une quelconque des revendications précédentes, **caractérisé en ce qu'**au moins une couche (4, 5, 6, 8, 9, 10, 11) est constituée d'au moins deux couches individuelles se raccordant l'une à l'autre à plat et reliées entre elles.

14. Procédé de fabrication d'un miroir selon l'une quelconque des revendications précédentes, **caractérisé en ce que** les couches (4-6; 8-10) formant le corps de miroir, y compris les couches réfrigérantes structurées (11) formant la structure réfrigérante, sont empilées l'une sur l'autre et ensuite reliées entre elles en utilisant le procédé DCB ou par brasage actif, et **en ce que**, après ce procédé de jonction, la face supérieure dégagée de la première couche en cuivre formant la face supérieure du miroir est fraisée au diamant.
